# EUROPEAN PATENT SPECIFICATION

(11) **EP 3 449 543 B1**
(45) Date of publication and mention of the grant of the patent: **09.09.2020**
(21) Application number: 17726700.2
(22) Date of filing: 28.04.2017
(51) Int. Cl.: H02J 3/38, H02J 7/35, H02J 1/10

(54) **METHOD AN DEVICE FOR DISCHARGING AN ENERGY-STORAGE SYSTEM IN A SOLAR PANEL INSTALLATION**
VERFAHREN UND VORRICHTUNG ZUM ENTLADEN EINES ENERGIESPEICHERSYSTEMS IN EINER SOLARPANELANLAGE
PROCÉDÉ ET DISPOSITIF PERMETTANT DE DÉCHARGER UN SYSTÈME DE STOCKAGE D'ÉNERGIE DANS UNE INSTALLATION DE PANNEAUX SOLAIRES

(30) Priority: 29.04.2016 BE 201605310
(43) Date of publication of application: 06.03.2019
(73) Proprietor: Futech, 3980 Tessenderlo (BE)
(72) Inventor: BEN-AL-LAL, Ismaël, 3440 Zoutleeuw (BE)
(74) Representative: IP HILLS NV
(86) International application number: PCT/IB2017/052483
(87) International publication number: WO 2017/187409

(56) References cited:
- EP-A1- 2 871 744
- EP-A2- 2 339 714
- US-A1- 2003 047 209
- US-A1- 2014 103 855
- US-A1- 2014 203 649
- US-A1- 2016 087 444
- DESAI H P ET AL: "Maximum Power Point Algorithm in PV Generation: An Overview", POWER ELECTRONICS AND DRIVE SYSTEMS, 2007. PEDS '07. 7TH INTERNATIONAL CONFERENCE ON, IEEE, PISCATAWAY, NJ, USA, 27 November 2007 (2007-11-27), pages 624-630, XP031242576, ISBN: 978-1-4244-0644-9

## Description

### Technical field

The present invention relates to solar panel installations which are connected to an electricity grid by means of a power point tracking module and converter. More specifically, the invention relates to solar panel installations which are connected to the electricity grid and in addition also to an energy-storage system, such as e.g. to a battery. An electricity grid may be a local electricity grid which autonomously provides the electricity supply for, for example, a house, a company or even a single user, i.e. off-grid. An electricity grid may also refer to the electricity grid to which several electricity producers are connected and which provides the power supply for a country or region.

### Prior art

Solar panels which are coupled to an electricity grid by means of a power point tracking module, or an MPPT module for short, and a converter may typically also be coupled to an energy-storage system. Together with the solar panels, the energy-storage system can then supply energy to the electricity grid or can also, if demand is lower than the yield of the panels, store energy.

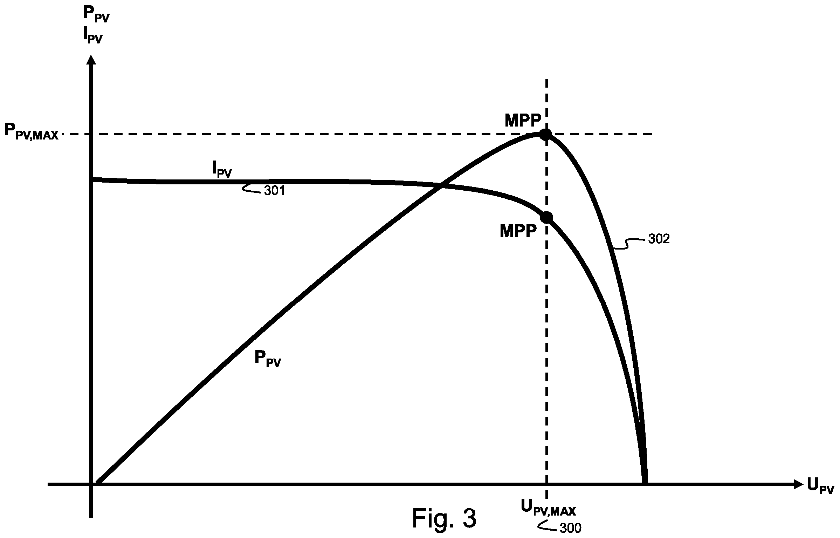

The MPPT module has to ensure that the solar panels operate in their optimum operating point. This is illustrated in Fig. 3, which shows the generated current I_{PV} and the generated power P_{PV} of the solar panels on the vertical axis versus the supplied voltage U_{PV} on the horizontal axis. At a certain temperature and light yield, the power and current will then follow a certain curve I_{PV} and P_{PV}. The supplied power P_{PV} then depends on the load on the solar panels. The MPPT module then ensures that the load is such that the solar panels operate at their ideal operating point, i.e. that they supply maximum power. This ideal operating point is referred to as the Maximum Power Point or the MPP for short.

Typically, the storage system, for example a battery, is coupled to the solar panels when there is no yield, such as for example at night. The battery is then coupled to the solar panels in parallel and is discharged by supplying energy to the electricity grid.

Since the demand for energy from the electricity grid may also be greater than the yield of the panels during the day, it is desirable to be able to discharge the battery during the day as well. However, since coupling takes place during operation of the MPPT module, it is a drawback that discharging will disturb the MPPT module and the solar panels will thus no longer supply the maximum power.

The documents US 2016/0087444 A1, US 2014/0203649 A1, and EP2 871 744 A1 disclose solar installations with batteries and their converters coupled directly in parallel to the solar panels.

Document US 2003/0047209 A1 discloses a similar circuit and mentions that the output voltage of the solar panels is a parameter which is measured for the control of discharge of the batteries.

### Summary of the invention

It is an object of the present invention to overcome the abovementioned drawback and to provide a way to enable an energy-storage system to discharge in a solar panel installation while the solar panels supply the maximum power.

According to a first aspect of the invention, this object is achieved by the method according to claim 1.

The load thus determines the output voltage of the solar panels and is continually adjusted by the MPPT module. By first measuring the output voltage of the solar panels before coupling the energy-storage system to the installation, an output voltage of the second converter can be set based on this measurement. The energy-storage system is then coupled to the solar panels via the second converter, in which case the voltage of the battery is matched with the voltage of the solar panels.

It is thus an advantage that the energy-storage system can be discharged while the solar panels are active. Discharging then no longer has to take place when the solar panels are inactive, such as for example at night.

As the voltage of the second converter is set based on the measured voltage of the solar panels, it is a further advantage that discharging can take place while the solar panels continue to operate in their MPP.

It is a further advantage that energy from the battery can be transferred to the grid with the MPPT module via the existing converter.

According to an embodiment, steps a), b), c) and d) are repeated after a certain time interval.

This time interval is preferably at least a period which the MPPT module needs to determine a new MPP.

While the battery is discharging, the light yield or the temperature of the solar panels may change, as a result of which the ideal operating point of the solar panels may change. By repeating the steps a), b), c) and d), these fluctuations may be compensated for. The MPPT module will then determine a new MPP after decoupling. It is thus an advantage that the solar panels continue to operate in the MPP, even if this changes over time.

The setting voltage is preferably greater than the measured voltage. Furthermore, the setting voltage is preferably chosen such that the power supplied by the energy-storage system remains below a maximum power limit of the energy-storage system.

According to a second aspect, the invention provides the device according to claim 4.

The abovementioned advantages of the method according to the first aspect are countless for this device according to the second aspect.

The device may furthermore be configured as one single apparatus. This makes it possible to connect the device to existing solar panel installations in a simple manner.

### Brief description of the drawings

Fig. 1 shows a solar panel installation with a device according to an embodiment of the present invention; and
Fig. 2 shows the curve of the voltage and current over time for various components in the solar panel installation according to Fig. 1; and
Fig. 3 shows the current-voltage characteristic and power-voltage characteristic of a prior-art solar panel; and
Fig. 4 shows the steps performed by the device in the solar panel installation from Fig. 1.

### Description of embodiments

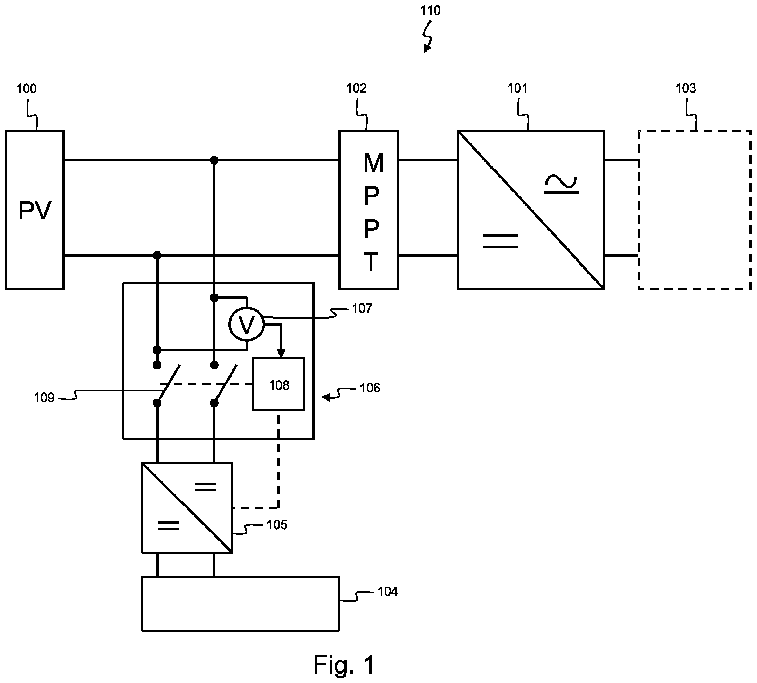

Fig. 1 shows a solar panel installation 110 connected to an electricity grid 103 according to an embodiment of the invention. The solar panel installation 110 comprises one or more solar panels 100. The solar panels 100 supply a direct voltage and direct current which is converted into an AC voltage by the converter 101. Alternately, the direct voltage is converted to another direct voltage. A maximum powerpoint tracking (MPPT) module 102 is arranged between the solar panels 100 and the converter 101.

The function of the MPPT module is to enable the solar panels to operate at their ideal operating point. This is illustrated in Fig. 3, where the current I_{PV} generated by the solar panels 100 is shown as a function of the output voltage U_{PV} at the solar panels, resulting in a current-voltage characteristic 301. Furthermore, the power P_{PV} generated by the solar panels is illustrated as a function of the same output voltage U_{PV}, resulting in the power-voltage characteristic 302. As solar panels have to generate as much power as possible, the MPPT module 102 will modify the load on the solar panels in such a way that the output power is at its maximum. This operating point at which the power is at its maximum is referred to as the maximum power point or MPP for short.

The current-voltage characteristic 301 of the solar panels is not constant, but varies over time. Thus, it is greatly dependent on the amount of light which falls on the solar panels and on the temperature. Therefore, the MPPT module 102 will continually adjust the load on the solar panels in order to ensure that the solar panels 100 are in each case able to supply the maximum power.

The solar panel installation 110 furthermore comprises an energy-storage system 104, a second converter 105 and a device 106. The converter 105 couples the energy-storage system 104 to the device 106, while the device 106 provides the coupling to the solar panels 100. Coupling and decoupling by device 106 is effected by a switch 109 which may be a single- or two-pole switch, with the switch connecting or disconnecting, respectively, one or both poles between the solar panels 100 and the second converter 105.

Alternatively, the switch 109 may be arranged between the second converter 105 and the energy-storage system 104 in order to effect the coupling or decoupling in this way.

The energy-storage system 104 may comprise, for example, batteries or capacitors.

The device 106 furthermore comprises a voltage meter 107 which measures the output voltage of the solar panels 100 and thus also the input voltage of the MPPT module 102. The voltage meter passes the measured voltage on to the calculation unit 108 which also controls the opening and closing of the switch 109 on the basis of the measured voltage.

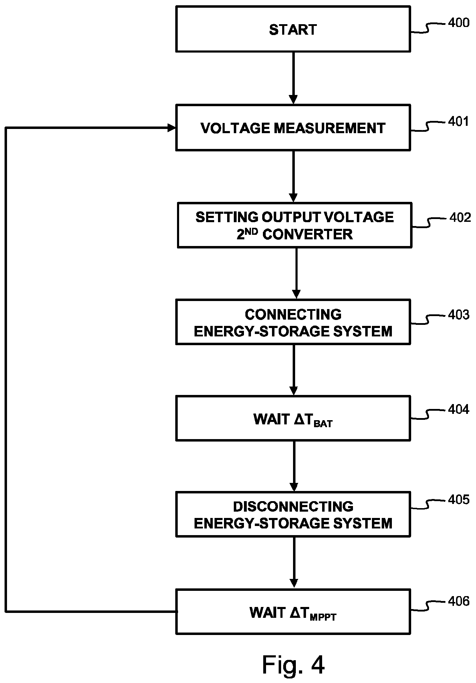

Fig. 4 shows steps performed by the calculation unit 108 for coupling and uncoupling the energy-storage system 104 via the second converter 105 to the solar panels 100 according to an embodiment of the invention.

At the start 400 of the method illustrated in Fig. 4, the switch 109 is open. Subsequently, in step 401, the voltage is measured by voltage meter 107 and passed on to the calculation unit 108. During this measurement, the solar panels 100 operate in the MPP and thus they supply the maximum power to the converter 101.

Subsequently, in step 402, the calculation unit 108 sets the output voltage of the second converter 105 on the basis of the voltage measurement in the previous step 401.

The setting voltage is preferably greater than the measured voltage. Furthermore, the setting voltage is preferably chosen such that the power supplied by the energy-storage system stays below a maximum power limit of the energy-storage system. In the example from Fig. 4, the setting voltage is chosen slightly greater than the measured voltage, for example not more than 10% of the measured voltage

Then, in step 403, the calculation unit 108 will close the switch 109 and thus couple the energy-storage system 104 to the solar panels 100 via the second converter 105. In the next step 404, the energy-storage system 104 will, together with the solar panels 100, supply energy to the converter 101 in order thus to provide in the demand for energy from the electricity grid 103. The energy-storage system 104, for example a battery, will thus discharge for a certain time ΔT_{BAT}.

During the time the energy-storage system 104 is coupled to the solar panels 100 via the second converter 105 because the switch 109 is closed, the light yield and temperature of the solar panels 100 may change. However, during discharge, the voltage of the solar panels 100 is determined by the set voltage of the second converter 105, as a result of which the solar panels 100 no longer supply the maximum power after a period of time.

After a certain time interval ΔT_{BAT}, in step 405, the control unit 109 will uncouple the energy-storage system 104 by opening the switch 109. This step is illustrated in step 405.

After uncoupling, the MPPT module 102 will determine the new MPP in order to enable the solar panels 100 again to supply the maximum power. In order to achieve this, the MPPT module 102 requires a certain time interval to identify this new MPP, which takes place in step 406.

After the MPPT module 102 has determined the new MPP, step 401 may be repeated, and the energy-storage system 104 may again be discharged via the following steps by connecting it on the basis of a new measured output voltage which is used to set the voltage of the second converter 105.

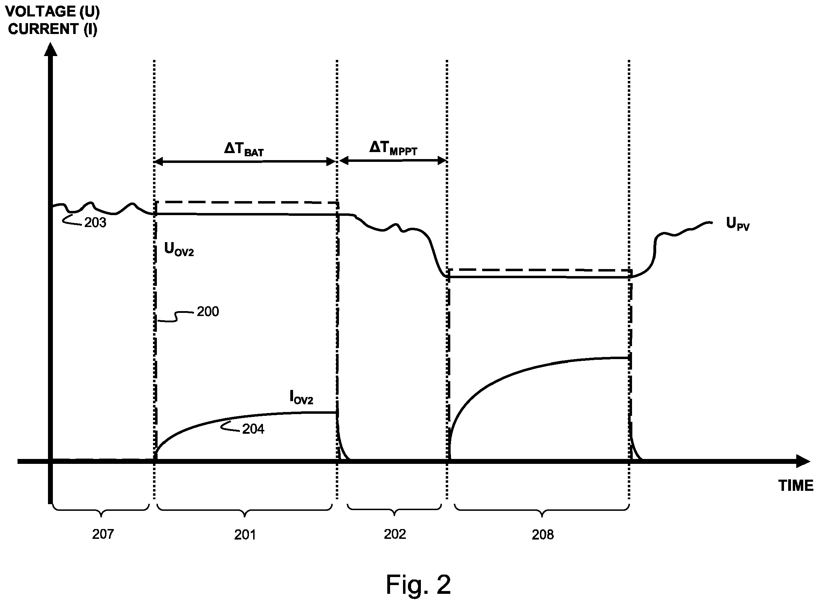

Fig. 2 shows the situation the situation when passing through the steps 400 to 406 using the following curves:
- curve 200 shows the output voltage U_{OV2} of the second converter 105;
- curve 203 shows the output voltage U_{PV} of the solar panels as a function of time;
- curve 204 shows the current I_{OV2} of the second converter 105 from the energy-storage system 104 which flows to the electricity grid 103 during discharging.

During time interval 207, switch 109 is open and only the solar panels 100 supply energy to the electricity grid 103. As the light yield and temperature change during this time interval 207, the output voltage of the solar panels 100 changes.

The output voltage 203 is determined by the MPPT module 102 in order thus to enable the solar panels 100 to supply the maximum power. This output voltage is measured by the voltage meter 107.

At a certain point in time, i.e. at step 402 and at the end of time interval 207, the voltage of the second converter 105 is set on the basis of the measured voltage of the solar panels 100, performed in step 401 and illustrated by curve 203. This voltage is illustrated by curve 200.

During the time interval 201, the energy-storage system 104 is coupled to the solar panels 100 and the battery discharges. As a result thereof, current, illustrated by curve 204, flows from the energy-storage system 104 to the electricity grid 103 via the second converter 105. During the time interval 201, the voltage of the solar panels is kept substantially constant by the second converter 105.

After a certain time period, at the end of the time interval 201 and at step 405, the switch 109 will be opened and the energy-storage system 104 is uncoupled from the solar panels 100. Current will no longer flow from the energy-storage system 100 to the electricity grid 103. The current through the second converter 105 is therefore reduced to zero in the time interval 202.

The MPPT module 102 will then set the voltage of the solar panels 100 again in order to enable the solar panels 100 again to supply the maximum power. This takes place during the time interval 202 and corresponds to step 406.

After the MPPT module 102 has set a new voltage for the solar panels 100, another voltage measurement is performed, i.e. step 401 is carried out again, and the same steps as in Fig. 4 are repeated.

Taking into account the new MPP, the output voltage of the second converter 105 may differ from the previously set voltage when repeating the steps. This is illustrated in curves 200 and 203, where the second converter 105 has a different voltage in the time interval 201 than in the time interval 208, while the battery is discharged during these intervals in each case. Consequently, the current which flows to the electricity grid, illustrated by curve 204, is different in each time interval 201 and 208.

Although the present invention has been illustrated by means of specific embodiments, it will be clear to the person skilled in the art that the invention is not limited to the details of the above illustrative embodiments, and that the present invention may be carried out with various changes and modifications without thereby departing from the area of application of the invention. Therefore, the present embodiments have to be seen in all areas as being illustrative and non-restrictive.

The scope of the invention is defined by the amended claims. In addition, the reader of this patent application will understand that the terms "comprising" or "comprise" do not exclude other elements or steps, that the term "a(n)" does not exclude the plural and that a single element, such as a computer system, a processor or another integrated unit, can perform the functions of different auxiliary means which are mentioned in the claims. Any references in the claims cannot be interpreted as a limitation of the respective claims. The terms "first", "second", "third", "a", "b", "c" and the like, when used in the description or in the claims, are used to distinguish between similar elements or steps and do not necessarily indicate a sequential or chronological order. In the same way, the terms "top side", "bottom side", "above", "below" and the like are used for the sake of the description and do not necessarily refer to relative positions. It should be understood that these terms are interchangeable under the appropriate circumstances and that embodiments of the invention can function according to the present invention in different sequences or orientations than those described or illustrated above.

## Claims

1. Method for discharging an energy-storage system (104) in a solar panel installation (110) wherein one or more solar panels (100) are coupled to an electricity grid (103) by means of a maximum power point tracking, MPPT, module (102) and a first converter (101); and wherein the MPPT module is configured to enable the one or more solar panels to supply a maximum power; and wherein the energy-storage system is couplable in parallel between the one or more solar panels (100) and the MPPT module via a second converter (105); **characterized in that** the method comprises the following steps:
a) measuring (401) an output voltage (203), the measured output voltage, of the one or more solar panels; and
b) based on the measured output voltage, setting (402) an output voltage (200) of the second converter, the setting voltage; and
c) coupling (403) the second converter in parallel with the MPPT module to the one or more solar panels for a certain first time interval (ΔT_{BAT}) such that the energy-storage system is discharged; and
d) decoupling (405) the second converter;
e) repeating steps a), b), c) and d) after a certain second time interval (ΔT_{MPPT}); wherein the certain second time interval (206) at least corresponds to a period which the MPPT module needs to enable the one or more solar panels to supply the maximum power.

2. Method according to Claim 1, wherein the setting voltage is greater than the measured voltage.

3. Method according to any of the preceding claims, wherein the setting voltage is chosen such that the power supplied by the energy-storage system remains below a maximum power limit of the energy-storage system.

4. Apparatus (106) for discharging an energy-storage system (104) in a solar panel installation (110), in which one or more solar panels (100) are coupled to an electricity grid (103) by means of a maximum power point tracking, MPPT, module (102) and a first converter (101); and wherein the MPPT module is configured to enable the one or more solar panels to supply a maximum power; and wherein the energy-storage system is couplable to the one or more solar panels (100) in parallel with the MPPT module via a second converter (105); and wherein the apparatus comprises a voltage meter (107) for measuring (401) an output voltage (203), the measured voltage, of the one or more solar panels; and the apparatus comprises a switch (109) for coupling the energy-storage system in parallel between the one or more solar panels and the MPPT module via the second converter; and **characterized in that** the apparatus contains a control unit (108) which is configured to perform the following steps:
a) based on the measured voltage, setting (402) an output voltage, the setting voltage, of the second converter; and
b) subsequently, coupling (403) the energy-storage system in parallel with the MPPT module to the one or more solar panels with the switch, for a certain first time interval (ΔT_{BAT}) such that the energy-storage system is discharged; and
c) decoupling (405) the second converter; and
d) repeating steps a), b), c) and d) after a certain second time interval (ΔT_{MPPT}); wherein the certain second time interval (206) at least corresponds to a period which the MPPT module needs to enable the one or more solar panels to supply the maximum power.

## Patentansprüche

1. Verfahren zum Entladen eines Energiespeichersystems (104) in einer Solarpanelinstallation (110), wobei ein oder mehrere Solarpanels (100) über ein Maximum Power Point Tracking-, MPPT, Modul (102) und einen ersten Wandler (101) mit einem Stromnetz (103) gekoppelt ist/sind; und wobei das MPPT-Modul so gestaltet ist, dass es dem einen oder mehreren Solarpanels ermöglicht, eine größtmögliche Leistung bereitzustellen; und wobei das Energiespeichersystem über einen zweiten Wandler (105) parallel zwischen das eine oder mehrere Solarpanels (100) und das MPPT-Modul gekoppelt werden kann; **dadurch gekennzeichnet, dass** das Verfahren die folgenden Schritte umfasst:
a) Messen (401) einer Ausgangsspannung (203), die gemessene Ausgangsspannung, des einen oder mehrerer Solarpanels; und
b) auf der Basis der gemessenen Ausgangsspannung, Einstellen (402) einer Ausgangsspannung (200) des zweiten Wandlers, die Einstellspannung; und
c) Koppeln (403) des zweiten Wandlers parallel zu dem MPPT-Modul mit dem einen oder mehreren Solarpanels über ein bestimmtes erstes Zeitintervall (ΔT_{BAT}), so dass das Energiespeichersystem entladen wird; und
d) Entkoppeln (405) des zweiten Wandlers;
e) Wiederholen der Schritte a), b), c) und d) nach einem bestimmten zweiten Zeitintervall (ΔT_{MPPT}); wobei das bestimmte zweite Zeitintervall (206) mindestens einem Zeitraum entspricht, den das MPPT-Modul benötigt, um es dem einen oder mehreren Solarpanels zu ermöglichen, die größtmögliche Leistung bereitzustellen.

2. Verfahren nach Anspruch 1, wobei die Einstellspannung größer ist als die gemessene Spannung.

3. Verfahren nach einem der vorstehenden Ansprüche, wobei die Einstellspannung so ausgewählt wird, dass die durch das Energiespeichersystem bereitgestellte Leistung unter einer maximalen Leistungsgrenze des Energiespeichersystems bleibt.

4. Vorrichtung (106) zum Entladen eines Energiespeichersystems (104) in einer Solarpanelinstallation (110), wobei ein oder mehrere Solarpanels (100) über ein Maximum Power Point Tracking-, MPPT, Modul (102) und einen ersten Wandler (101) mit einem Stromnetz (103) gekoppelt ist/sind; und wobei das MPPT-Modul so gestaltet ist, dass es dem einen oder mehreren Solarpanels ermöglicht, eine größtmögliche Leistung bereitzustellen; und wobei das Energiespeichersystem über einen zweiten Wandler (105) parallel zwischen das eine oder mehrere Solarpanels (100) und das MPPT-Modul gekoppelt werden kann; und wobei die Vorrichtung einen Spannungsmesser (107) zum Messen (401) einer Ausgangsspannung (203), die gemessene Spannung, des einen oder mehrerer Solarpanels; und wobei die Vorrichtung einen Schalter (109) zur parallelen Kopplung des Energiespeichersystems zwischen dem einen oder mehreren Solarpanels und dem MPPT-Modul über den zweiten Wandler umfasst; und **dadurch gekennzeichnet, dass** die Vorrichtung eine Steuereinheit (108) aufweist, die für die Durchführung der folgenden Schritte gestaltet ist:
a) auf der Basis der gemessenen Spannung, Einstellen (402) einer Ausgangsspannung des zweiten Wandlers, die Einstellspannung; und
b) in der Folge, Koppeln (403) des Energiespeichersystems parallel zu dem MPPT-Modul mit dem einen oder mehreren Solarpanels mit dem Schalter über ein bestimmtes erstes Zeitintervall (ΔT_{BAT}), so dass das Energiespeichersystem entladen wird; und
c) Entkoppeln (405) des zweiten Wandlers; und
d) Wiederholen der Schritte a), b), c) und d) nach einem bestimmten zweiten Zeitintervall (ΔT_{MPPT}); wobei das bestimmte zweite Zeitintervall (206) mindestens einem Zeitraum entspricht, den das MPPT-Modul benötigt, um es dem einen oder mehreren Solarpanels zu ermöglichen, die größtmögliche Leistung bereitzustellen.

## Revendications

1. Procédé pour décharger un système de stockage d'énergie (104) dans une installation de panneaux solaires (110), au moins un panneau solaire (100) étant couplé à un réseau électrique (103) au moyen d'un module de poursuite des points de puissance maximale, MPPT, (102) et d'un premier convertisseur (101) ; et le module MPPT étant conçu pour permettre à l'au moins un panneau solaire de fournir une puissance maximale ; et le système de stockage d'énergie pouvant être couplé en parallèle entre au moins un panneau solaire (100) et le module MPPT par l'intermédiaire d'un second convertisseur (105) ; **caractérisé en ce que** le procédé comprend les étapes consistant à :
a) mesurer (401) une tension de sortie (203), la tension de sortie mesurée, de l'au moins un panneau solaire ; et
b) sur la base de la tension de sortie mesurée, régler (402) une tension de sortie (200) du second convertisseur, la tension de réglage ; et
c) coupler (403) le second convertisseur en parallèle avec le module MPPT à l'au moins un panneau solaire pendant un certain premier intervalle de temps (ΔT_{BAT}) de sorte que le système de stockage d'énergie soit déchargé ; et
d) découpler (405) le second convertisseur ;
e) répéter les étapes a), b), c) et d) après un certain second intervalle de temps (ΔT_{MPPT}) ; le certain second intervalle de temps (206) correspondant au moins à une période dont le module MPPT a besoin pour permettre à l'au moins un panneau solaire de fournir la puissance maximale.

2. Procédé selon la revendication 1, la tension de réglage étant supérieure à la tension mesurée.

3. Procédé selon l'une quelconque des revendications précédentes, la tension de réglage étant choisie de sorte que la puissance fournie par le système de stockage d'énergie reste inférieure à une limite de puissance maximale du système de stockage d'énergie.

4. Appareil (106) pour décharger un système de stockage d'énergie (104) dans une installation de panneaux solaires (110), au moins un panneau solaire (100) étant couplé à un réseau électrique (103) au moyen d'un module de poursuite des points de puissance maximale, MPPT, (102) et d'un premier convertisseur (101) ; et le module MPPT étant conçu pour permettre à l'au moins un panneau solaire de fournir une puissance maximale ; et le système de stockage d'énergie pouvant être couplé à l'au moins un panneau solaire (100) en parallèle avec le module MPPT par l'intermédiaire d'un second convertisseur (105) ; et l'appareil comprenant un dispositif de mesure de tension (107) pour mesurer (401) une tension de sortie (203), la tension mesurée, de l'au moins un panneau solaire ; et l'appareil comprenant un commutateur (109) pour coupler le système de stockage d'énergie en parallèle entre l'au moins un panneau solaire et le module MPPT par l'intermédiaire du second convertisseur ; et **caractérisé en ce que** l'appareil contient une unité de commande (108) qui est conçue pour effectuer les étapes suivantes :
a) sur la base de la tension mesurée, régler (402) une tension de sortie, la tension de réglage, du second convertisseur ; et
b) ultérieurement, coupler (403) le système de stockage d'énergie en parallèle avec le module MPPT à l'au moins un panneau solaire avec l'interrupteur, pendant un certain premier intervalle de temps (ΔT_{BAT}) de sorte que le système de stockage d'énergie soit déchargé ; et
c) découpler (405) le second convertisseur ; et
d) répéter les étapes a), b), c) et d) après un certain second intervalle de temps (ΔT_{MPPT}) ; le certain second intervalle de temps (206) correspondant au moins à une période dont le module MPPT a besoin pour permettre à l'au moins un panneau solaire de fournir la puissance maximale.
